(19)

Europäisches
Patentamt
European
Patent Office
Office européen
des brevets

(11)　　EP 2 605 506 B1

(12)　　**EUROPEAN PATENT SPECIFICATION**

(45) Date of publication and mention
of the grant of the patent:
**10.04.2019　Bulletin 2019/15**

(21) Application number: **11840713.9**

(22) Date of filing: **09.11.2011**

(51) Int Cl.:
***G06T 7/32*** *(2017.01)*

(86) International application number:
**PCT/JP2011/075854**

(87) International publication number:
**WO 2012/066999 (24.05.2012 Gazette 2012/21)**

(54) **DISPLACEMENT MAGNITUDE DETECTION DEVICE FOR VEHICLE-MOUNTED CAMERA**

HUBRAUMERKENNUNGSVORRICHTUNG FÜR EINE FAHRZEUGMONTIERTE KAMERA

DISPOSITIF DE DÉTECTION DE L'AMPLEUR DU DÉPLACEMENT D'UNE CAMÉRA MONTÉE SUR UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.11.2010　JP 2010256096**

(43) Date of publication of application:
**19.06.2013　Bulletin 2013/25**

(73) Proprietor: **Honda Motor Co., Ltd.**
**Minato-ku**
**Tokyo 107-8556 (JP)**

(72) Inventor: **MORI, Naoki**
**Wako-shi**
**Saitama 351-0193 (JP)**

(74) Representative: **Weickmann & Weickmann**
**PartmbB**
**Postfach 860 820**
**81635 München (DE)**

(56) References cited:
**JP-A- 3 268 112　　　JP-A- 9 023 419
JP-A- H0 923 419　　JP-A- H03 268 112
JP-A- 2002 112 252　　US-A1- 2009 153 742**

EP 2 605 506 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a device which detects a displacement magnitude of a vehicle-mounted camera, on the basis of an image taken by the vehicle-mounted camera.

Background Art

As a technique of detecting a displacement magnitude of a camera, for example, a technique of setting a shake detecting area in an imaging screen of a camera for correcting the shaking of the screen by the fluctuation of the camera, detecting a center-of-gravity position of a brightness of the shake detecting area in each time-series captured image, and obtaining a displacement magnitude of the camera from fluctuation by a change in the center-of-gravity position (for example, refer to JP H4-287579).

Prior Art Document

Patent Document

JP H03 268112 A discloses an environment recognition device for a moving vehicle, which identifies vertical image position shifts due to the pitching of the vehicle.
JP H09 23419A relates to an image processing apparatus mounted on moving vehicles.
US 2009/153742 A1 describes a method and device for global motion estimation.

Summary of the Invention

Problem to be Solved by the Invention

In a case of detecting a displacement magnitude of a vehicle-mounted camera using the technique disclosed in Patent Document 1, an imaging target within the shake detecting area in each time-series image taken by the camera becomes different during a traveling of the vehicle, by receiving an influence especially from a vertical rocking (pitching) of the vehicle.
In this case, when the center-of-gravity position of the brightness of the shake detecting area in each captured image corresponds to an imaging portion of a different object, there is an inconvenience that the displacement magnitude of the camera cannot be detected accurately.
The present invention has been made in view of such background, and aims at providing a displacement magnitude detection device for a vehicle-mounted camera capable of detecting a displacement magnitude of the vehicle-mounted camera accurately from the captured image of the vehicle-mounted camera.

Means for Solving the Problem

According to the present invention, the above object is solved by a
displacement magnitude device for a vehicle-mounted camera according to claim 1. Embodiments of the present invention include a reference value calculating unit which divides, in an image taken by the vehicle-mounted camera, a predetermined region for measurement into a plurality of measurement unit regions having a width of a predetermined number of pixels in a specific direction which corresponds to a perpendicular direction in real space, and calculates a sum or an average of a luminance value or a saturation value of pixels inside each measurement unit region as a reference value of each measurement unit region; and a camera displacement magnitude calculating unit which calculates a degree of correlation between a first distribution manner and a second distribution manner, the first distribution manner being a distribution manner in the specific direction of each reference value calculated by the reference value calculating unit for a first image taken by the camera, and the second distribution manner being a distribution manner in the specific direction of each reference value calculated by the reference value calculating unit for a second image taken by the camera at a time point different from the first image, by shifting the first distribution manner or the second distribution manner in the specific direction, and calculates the displacement magnitude of the camera between an imaging time point of the first image and an imaging time point of the second image, on the basis of a shift amount in which the degree of correlation becomes the highest (a first aspect of the invention).
According to the first aspect of the invention, the reference value calculating unit calculates the reference value of each measurement unit region of the region for measurement, for the image taken by the camera. The reference value indicates an overall tendency of the luminance or the saturation of each measurement unit region, and since each measurement unit region is obtained by dividing the region for measurement with a width in the specific direction, the dispersion manner of each reference value in the specific direction shows the overall dispersion manner of the luminance or the saturation of the region for measurement in the specific direction.

Thereafter, the camera displacement magnitude calculating unit calculates the degree of correlation between the first distribution manner for the first image and the second distribution manner for the second image, that are calculated with respect to the first image and the second image taken at different time points, by shifting the first distribution manner or the second distribution manner in the specific direction. Further, the camera displacement magnitude calculating unit calculates the displacement magnitude of the camera, on the basis of the shift amount in which the degree of correlation becomes the highest.

In this case, the first distribution manner and the second distribution manner indicate the distribution manner of the overall luminance or saturation within the region for measurement. Therefore, the camera displacement magnitude calculating unit may calculate the shift amount in the specific direction of an imaged object within the region for measurement while reducing the influence of a change of an imaging target of the region for measurement between the first image and the second image by the displacement of the camera. Further, since the specific direction corresponds to the perpendicular direction in the real space, the camera displacement magnitude calculating unit may calculate the displacement magnitude of the camera in the perpendicular direction accurately on the basis of the shift amount.

Further, in the first aspect of the invention, the camera includes a road in front of a vehicle mounted with the camera as an imaging range, and the region for measurement is set according to a position of an image portion of the road in an image taken by the camera (a second aspect of the invention).

According to the second aspect of the invention, by setting the region for measurement including the image portion of the road in which the distribution of the luminance or the saturation is stable, it becomes possible to increase the accuracy of the displacement magnitude of the camera calculated by the camera displacement magnitude calculating unit.

Further, in the second aspect of the invention, a region for measurement changing unit which changes the region for measurement according to the position of the image portion of the road, or a position of an image portion of an existing object in a surroundings of the road, in the image taken by the camera, is further included (a third aspect of the invention).

According to the third aspect of the invention, the region for measurement changing unit performs the processing of changing the region for measurement so as to increase a proportion of the image portion of the road within the region for measurement, according to the position of the image portion of the road, or the position of the image portion of the existing object in the surroundings of the road in the image taken by the camera, or change the region for measurement to exclude the image portion of the other vehicle, and the like. By changing the region for measurement as such, it becomes possible to suppress the accuracy of the displacement magnitude of the camera calculated by the camera displacement magnitude calculating unit from dropping, from the influence of the image portion other than the image portion of the road.

Brief Description of Drawings

Fig. 1 is an explanatory view of a fixing mode of a camera and a vehicle travel assistance device to a vehicle;
Fig. 2 is a configuration view of the vehicle travel assistance device;
Fig. 3 is a flow chart of a calculating processing of a vertical luminance vector in the vehicle travel assistance device;
Fig. 4 is an explanatory view of the vertical luminance vector;
Fig. 5 is an explanatory view of a processing of calculating a displacement magnitude of the camera, from a degree of correlation of the vertical luminance vector in time-series images; and
Fig. 6A and Fig. 6B are explanatory views of an example of changing a region for measurement.

Mode for Carrying out the Invention

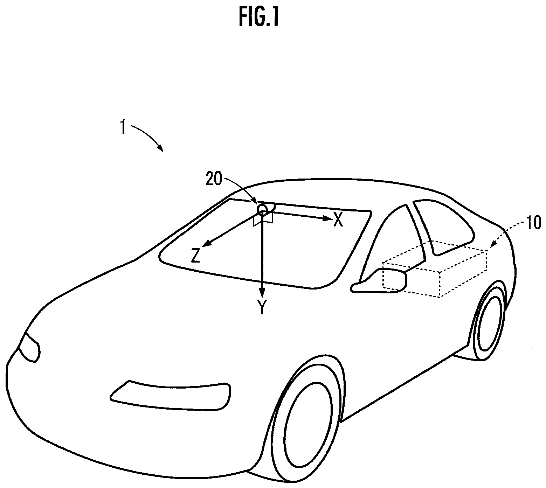

An embodiment of the present invention will be explained with reference to Fig. 1 through Fig. 5. With reference to Fig. 1, in the present embodiment, a displacement magnitude detection device for a vehicle-mounted camera of the present invention is configured as a part of a function of a vehicle travel assistance device 10 mounted on a vehicle 1 (self vehicle). A camera 20 (a vehicle-mounted camera) and the vehicle travel assistance device 10 are mounted to the vehicle 1.

The camera 20 is fixed to inside of the vehicle, so as to image a front of the vehicle 1 through a windshield, and a real space coordinate system taking a fixing portion of the camera 20 as an origin, a lateral direction of the vehicle 1 (vehicle width direction) as an X axis, an up-down direction (perpendicular direction) as a Y axis, and an anteroposterior direction (traveling direction) as a Z axis, is defined.

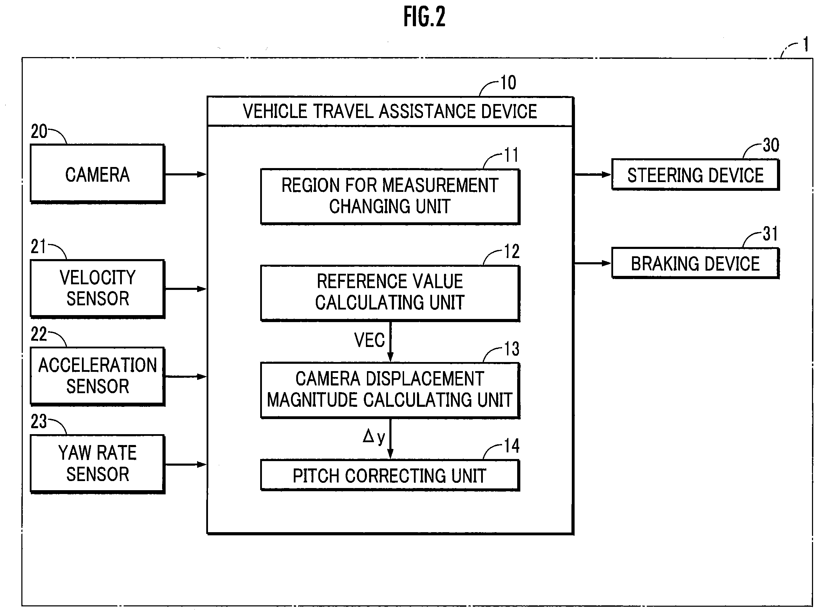

With reference to Fig. 2, the vehicle 1 is equipped with, in addition to the vehicle travel assistance device 10, a velocity sensor 21, an acceleration sensor 22, a yaw rate sensor 23, a steering device 30, and a braking device 31. The velocity sensor 21 outputs a detection signal of a velocity of the vehicle 1, the acceleration sensor 22 outputs a detection signal of an acceleration of the vehicle 1, and the yaw rate sensor 23 outputs a detection signal of a yaw rate of the vehicle 1.

The vehicle travel assistance device 10 is an electronic unit configured from a CPU, a memory and the like, and is input with a video signal from the camera 20 and the detection signals from each sensors 21, 22, 23. The vehicle travel assistance device 10 has a function of detecting a displacement magnitude of the camera 20 in the Y-axis direction accompanying a rocking of the vehicle in the up-down direction, and correcting (pitch compensating) an offset of an image taken by the camera 20, and the configuration of detecting the displacement magnitude corresponds to the displacement magnitude detection device for the vehicle-mounted camera of the present invention.

The vehicle travel assistance device 10 functions as, by making the CPU execute control programs for vehicle travel assistance stored in the memory, a region for measurement changing unit 11, a reference value calculating unit 12, a camera displacement magnitude calculating unit 13, and a pitch compensating unit 14, that are configurations for performing the pitch compensation. The vehicle travel assistance device 10 performs the pitch compensation to the image taken by the camera 20, detects a lane mark provided on a road from the image after the pitch compensation, and recognizes a traveling lane of the vehicle 1.

The vehicle 1 is further mounted with the steering device 30 and the braking device 31, and the vehicle travel assistance device 10 executes a travel assistance control of preventing the vehicle 1 from departing from the traveling lane, by controlling one of or both of the operation of the steering device 30 and the braking device 31.

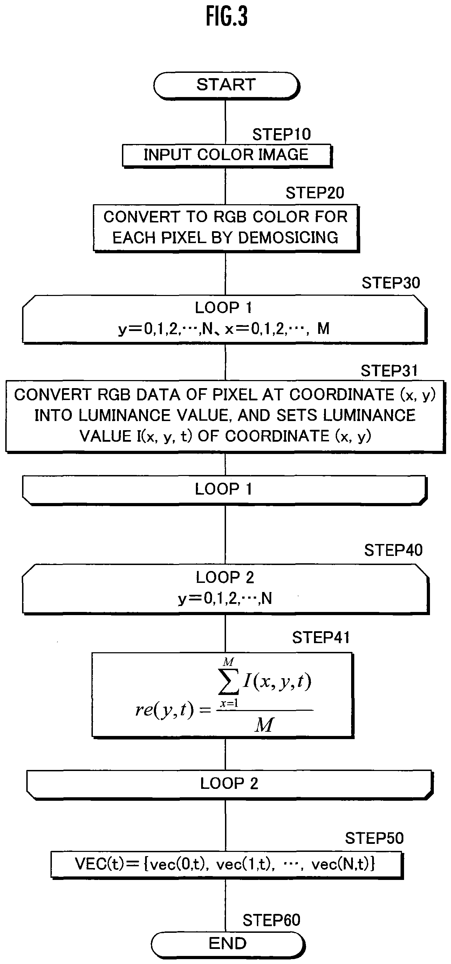

Next, according to a flow chart shown in Fig. 3, a processing by the reference value calculating unit 12 will be explained. The vehicle travel assistance device 10 inputs the image (color image) taken by the camera 20 in STEP10, and calculates data of an RGB color of each pixel by performing demosaicing to the output of the pixels of the camera 20 and in STEP 20. The demosaicing in STEP 20 is performed since the camera 20 of the present embodiment uses an imaging element of a single chip of a Bayer array. However, the demosaicing process is unnecessary in a case where a camera using an imaging element of three-chip RGB independent type.

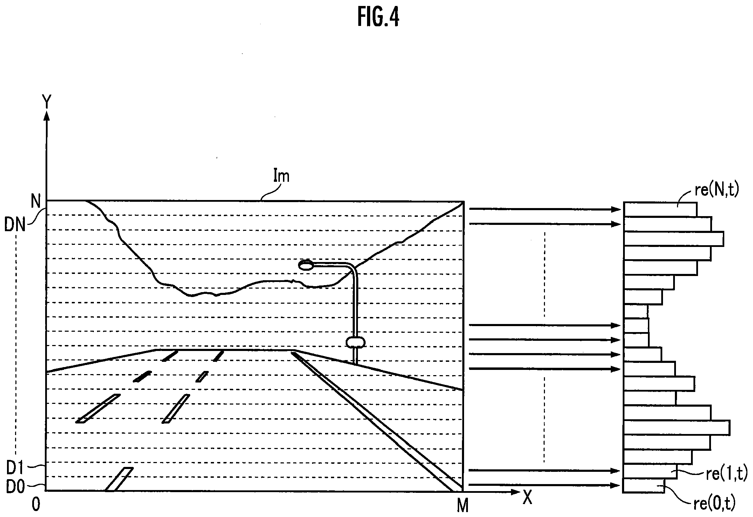

STEP30 through STEP50 are processing by the reference value calculating unit 12. The image taken by the camera 20 is, as is shown in Fig. 4, the image Im of (N+1) * (M+1) pixels, with a vertical coordinate (y coordinate) of 0 to N (pixel), and a horizontal coordinate (x coordinate) of 0 to M (pixel). The y-axis direction corresponds to the specific direction of the present invention, which corresponds to the perpendicular direction in the real space.

The reference value calculating unit 12 executes a loop 1 in STEP30, and converts the R, G, and B data of the pixel of each coordinate (x, y) (x=0, 1, 2, ..., M, y=0, 1, 2,...N) of the image Im to a luminance value, and sets the luminance value I (x, y, t) (t represents an imaging time point) of each pixel. Here, one of the R, G, and B data of each pixel may be selected and used instead of the luminance value of each pixel.

In a loop in subsequent STEP40, the reference value calculating unit 12 divides the image Im into N+1 measurement unit regions DO to DN, each region having the same y coordinate and x coordinate of 0 to M, and having 1*(M+1) pixels. Here, the width of the measurement unit region in y-axis direction may not be one pixel (one line), but may be a plurality of pixels.

Thereafter, the reference value calculating unit 12 calculates an average value of the luminance value of the pixels in each measurement unit region, using the following equation (1), as a reference value re (y,t) (y=0, 1, ..., N, t is a time of imaging of the image Im) of each measurement unit region.

[Equation 1]

$$re(y,t) = \frac{\sum_{x=0}^{M} I(x,y,t)}{M+1} \quad \cdots \cdots (1)$$
$$y = 0,1,2,\cdots, N$$

In subsequent STEP50, the reference value calculating unit 12 sets, among the reference values re(y,t) (y=0, 1, 2, ..., N) of each measurement unit region, a vertical luminance vector VEC(t) of the following equation (2) which has a component in a range narrower than N (s ~ s+w, 1<s, w<N) by a shift amount (for example, a maximum of 30 pixels) to be explained later, proceeds to STEP60, and ends the processing.

[Equation 2]

$$VEC(t) = \{re(s,t), \quad re(s \quad +1,t), re(s+2,t), \cdots, re(s+w,t)\} \quad \cdots\cdots (2)$$

With the processing explained above, the reference value calculating unit 12 sets the vertical luminance vector VEC(t), to the image Im sequentially taken (for example, every 33 msec) by the camera 20. The vertical luminance vector VEC(t) shows a distribution manner of the reference values re(y, t) in the vertical direction (y direction) in a range of y=s to s+w.

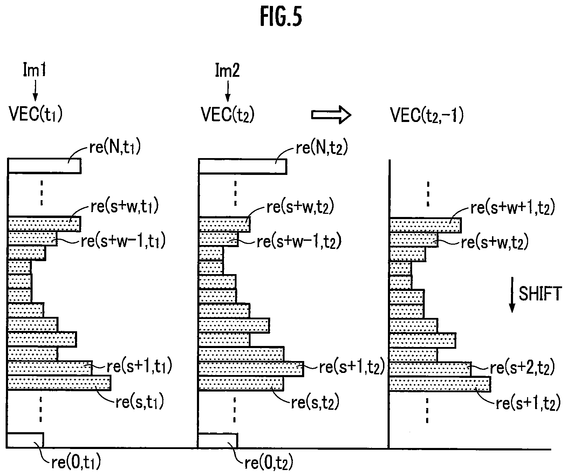

Thereafter, as is shown in Fig. 5, the camera displacement magnitude calculating unit 13 obtains the displacement magnitude of the camera 20 in the vertical direction (Y direction), by obtaining a degree of correlation between a luminance vector $VEC(t_1)$ of an image Im1 and a luminance vector $VEC(t_2)$ of an image Im2, that are calculated for the images Im1 and Im2 taken at different time points $t_1$, $t_2$ (=$t_1$+33msec), by shifting the components of the luminance vector $VEC(t_2)$ in the y direction.

In Fig. 5, the distribution of the components of $VEC(t_2)$ has a tendency of shifting the distribution of the components of $VEC(t_1)$ upwards. Therefore, it can be estimated that the position of the camera 20 at $t_2$ has displaced downwards with respect to the position of the camera 20 at $t_1$.

As is shown in the following equation (3), the camera displacement magnitude calculating unit 13 sequentially obtains a luminance vector VEC ($t_2$, i) (i is a shift value, i= ±1, ±2, ..., + denoting an up shift, and - denoting a down shift) obtained by shifting the luminance vector $VEC(t_2)$ in the up-down direction within a predetermined shift range, and calculates the degree of correlation with the luminance vector $VEC(t_1)$.

[Equation 3]

$$VEC(t,i) = \{re(s+i,t), re(s+1+i,t), re(s+2+i,t), \cdots, re(s+w+i,t)\} \quad \cdots\cdots (3)$$

In Fig. 5, a luminance vector $VEC(t_2,-1)$ shifted downwards by one pixel is shown as an example. As is explained above, the camera displacement magnitude calculating unit 13 calculates the degree of correlation with the luminance vector $VEC(t_1)$ of the first image Im1, by sequentially calculating VEC($t_2$, i) by shifting the luminance vector $VEC(t_2)$ of the second image Im2 up and down by i.

Thereafter, on the basis of the shift value i in which the degree of correlation with the luminance vector $VEC(t_1)$ of the first image Im1 becomes the highest, the camera displacement magnitude calculating unit 13 calculates a displacement magnitude $\Delta y$ of the camera 20 in the vertical direction between $t_1$ and $t_2$. The displacement magnitude $\Delta y$ of the camera 20 is proportional to the shift value i.

The pitch compensating unit 14 performs the correction of shifting (the pitch compensation) to compensate for the displacement magnitude $\Delta y$ of the camera 20 with respect to the second image Im2, and the vehicle travel assistance device 10 performs a detecting processing of an image portion of an object of the lane mark, with respect to the second image Im2 after performing the pitch compensation. By doing so, it becomes possible to prevent a transition of detected positions of the lane mark between the first image and the second image from being offset from an original position, from an influence of a pitching (rocking in the perpendicular direction) of the vehicle 1. Further, it becomes possible to prevent a recognition accuracy of the position of the lane mark from dropping by the offset.

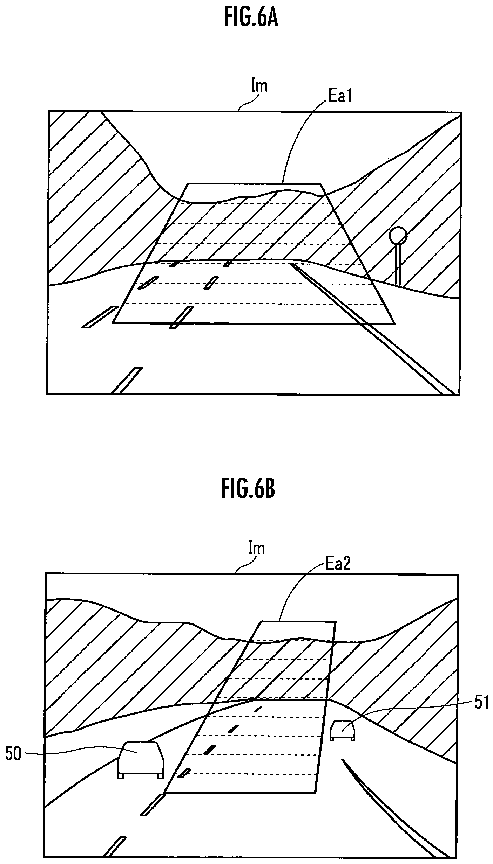

In the present embodiment, the measurement unit region D (D0 to DN) is set taking a whole of the image Im taken by the camera 20 as the region for measurement, as shown in Fig. 4. However, a region for measurement Ea1 having a trapezoidal shape to match the image portion of a road may be set by the region for measurement changing unit 11, as is shown in Fig. 6A.

By setting the region for measurement Ea1 this way, it becomes possible to obtain the luminance vector VEC while avoiding the influence of traffic signs, buildings and the like existing in a surroundings of the road.

Further, when an image portion of an object close to the vehicle 1 is used when obtaining the pitch amount of the camera 20, a displacement of the image portion becomes larger with respect to a slight pitching of the vehicle 1, so that there are cases where an error in the displacement magnitude detection of the camera 20 becomes large. Therefore, by setting the region for measurement Ea1 so as to include a vicinity of a horizon far away from the vehicle 1, it becomes possible to increase the detection accuracy of the displacement magnitude of the camera 20.

Further, as is shown in Fig. 6B, when it is detected that image portions 50, 51 of other vehicles are included in the image Im taken by the camera 20, the region for measurement changing unit 11 may change to a region for measurement Ea2 in which these image portions are removed.

Further, in the present embodiment, the luminance vector VEC is calculated using the luminance of each pixel in the image Im taken by the camera 20. However, a vector of saturation may be calculated using saturation of each pixel in the image Im, and the displacement magnitude of the camera may be obtained by calculating the degree of correlation between the saturation vectors of the captured images taken at different time points.

Further, in the present embodiment, the average value of the luminance value of each pixel in each measurement unit region is set as the reference value of each measurement unit region, by the above-mentioned equation (1). However, a total value of the luminance value of the pixels of each measurement unit region may be set as the reference value of each measurement unit region.

Further, the average value and the total value may be used separately in the region for measurement. For example, the reference value may be calculated using the total value in an upper half of the region for measurement, and the reference value may be calculated using the average value in a lower half of the region for measurement. Also, both of the reference values using the average value and the reference value using the total value may be calculated, and the one with a larger amount of characteristics (one in which a peak of a luminance profile by the luminance vector becomes larger) may be adopted.

Further, in the present embodiment, when calculating the degree of correlation between the luminance vectors of the images taken at different time points, the camera displacement magnitude calculating unit 13 shifted the luminance vector by a unit of one pixel in the up-down direction. However, it is possible to improve the calculation accuracy of the displacement magnitude, by shifting the luminance vector by a unit less than 1 (for example, a unit of 0.1 pixel). In this case, a processing of sequencing (subpixeling) a discrete function in the above-mentioned equation (2) with a technology of a spline interpolation and the like.

Further, in the present embodiment, an example using the color camera 20 is used is shown. However, the camera may be a black-and-white camera. In a case where the black-and-white camera is used, the processing of converting the color component into the luminance value by STEP20 and the loop 1 in STEP30 in FIG. 3 becomes unnecessary.

Industrial Applicability

As is explained above, according to the displacement magnitude detection device for the vehicle-mounted camera of the present invention, it becomes possible to accurately detect the displacement magnitude of the vehicle-mounted camera, from the image taken by the vehicle-mounted camera. Therefore, it is useful in performing the pitch compensation to the image taken by the vehicle-mounted camera.

References

1... vehicle, 10... vehicle travel assistance device, 11... region for measurement changing unit, 12... reference value calculating unit, 13... camera displacement magnitude calculating unit, 14... pitch compensating unit, 20... camera, 21... velocity sensor, 22... acceleration sensor, 23... yaw rate sensor, 30... steering device, 31... braking device.

**Claims**

1. A displacement magnitude detection device (10) for a vehicle-mounted camera (20), comprising:

   a reference value calculating unit (12) which divides, in an image (Im, Im1, Im2) taken by the vehicle-mounted camera (20) with a vertical coordinate (y) and a horizontal coordinate (x), a predetermined region for measurement (Ea1, Ea2) into a plurality of measurement unit regions (D0, D1, ..., DN) having a width of a predetermined number of pixels in the vertical direction (Y), and calculates a sum or an average of a luminance value (I(x, y, t)) or a saturation value of pixels inside each measurement unit region (D0, D1, ..., DN) as a reference value (re(y, t)) of each measurement unit region (D0, D1, ..., DN);
   wherein the reference value calculating unit (12) sets a vector that shows a first distribution manner (VEC(t1)) of the reference values (re(y, t)) in the vertical direction (Y) calculated by the reference value calculating unit (13) for a first image (Im1) taken by the camera at a first imaging time point (t1) and also sets a vector that shows a second distribution manner (VEC(t2)) of the reference values (re(y, t)) in the vertical direction (Y) calculated by the reference value calculating unit (13) for a second image (Im2) taken by the camera at a second imaging time point (t2) different from the first imaging time point (t1); and
   a camera displacement magnitude calculating unit (13) which calculates the displacement magnitude (Δy) of the camera (20) between the first imaging time point (t1) of the first image (Im1) and the second imaging time point (t2) of the second image (Im2), on the basis of a shift amount in which the degree of correlation between the first distribution manner (VEC(t1)) and the second distribution manner (VEC(t2)) becomes the highest, wherein each of the images (Im, Im1, Im2) taken by the camera (20) includes a road in front of the vehicle, and the region for measurement (Eal, Ea2) is set to a region including a vicinity of a horizon far away from the vehicle, and including an image portion of the road, wherein when it is detected that image portions (50, 51) of other vehicles are included in the images (Im, Im1, Im2) taken by the camera (20), a region for measurement changing unit (11) changes to a region for measurement in which these image portions are removed.

2. The displacement magnitude detection device (10) for the vehicle-mounted camera (20) according to Claim 1, wherein
the region for measurement (Eal, Ea2) is set according to a position of an image portion of the road in an image taken by the camera.

3. The displacement magnitude detection device (10) for the vehicle-mounted camera (20) according to Claim 2, wherein the region for measurement changing unit (11) changes the region for measurement (Eal, Ea2) according to the position of the image portion of the road, or a position of an image portion of an object in surroundings of the road, in the image (Im, Im1, Im2) taken by the camera (20).

**Patentansprüche**

1. Verlagerungsausmaßerfassungsvorrichtung (10) für eine an einem Fahrzeug montierte Kamera (20), umfassend:

eine Referenzwertberechnungseinheit (12), welche in einem Bild (Im, Im1, Im2), welches durch die an einem Fahrzeug montierte Kamera (20) mit einer vertikalen Koordinate (y) und einer horizontalen Koordinate (x) aufgenommen worden ist, einen vorbestimmten Messbereich (Ea1, Ea2) in eine Mehrzahl von Messeinheitsbereichen (D0, D1, ..., DN) unterteilt, welche eine Breite von einer vorbestimmten Anzahl von Pixeln in der vertikalen Richtung (Y) aufweisen, und eine Summe oder einen Durchschnitt eines Luminanzwertes (I(x, y, t)) oder eines Sättigungswertes von Pixeln innerhalb jedes Messeinheitsbereichs (D0, D1, ..., DN) als einen Referenzwert (re(y,t)) jedes Messeinheitsbereichs (D0, D1, ..., DN) berechnet;
wobei die Referenzwertberechnungseinheit (12) einen Vektor festlegt, welcher eine erste Verteilungsart (VEC(t1)) der Referenzwerte (re(y,t)) in der vertikalen Richtung (Y) zeigt, welche durch die Referenzwertberechnungseinheit (13) für ein erstes Bild (Im1) berechnet worden sind, welches durch die Kamera an einem ersten Abbildungszeitpunkt (t1) aufgenommen worden ist, und ferner einen Vektor festlegt, welcher eine zweite Verteilungsart (VEC(t2)) der Referenzwerte (re(y,t)) in der vertikalen Richtung (Y) zeigt, welche durch die Referenzwertberechnungseinheit (13) für ein zweites Bild (Im2) berechnet worden sind, welches durch die Kamera an einem zweiten Abbildungszeitpunkt (t2) aufgenommen worden ist, welcher von dem ersten Abbildungszeitpunkt (t1) verschieden ist; und
eine Kameraverlagerungsausmaßberechnungseinheit (13), welche das Verlagerungsausmaß (Δy) der Kamera (20) zwischen dem ersten Abbildungszeitpunkt (t1) des ersten Bildes (Im1) und dem zweiten Abbildungszeitpunkt (t2) des zweiten Bildes (Im2) auf der Grundlage eines Verschiebungsbetrags berechnet, in welchem der Grad einer Korrelation zwischen der ersten Verteilungsart (VEC(t1)) und der zweiten Verteilungsart (VEC(t2)) am höchsten wird, wobei jedes der Bilder (Im, Im1, Im2), welches durch die Kamera (20) aufgenommen worden ist, eine Straße vor dem Fahrzeug umfasst, und
der Messbereich (Ea1, Ea2) auf einen Bereich festgelegt ist, der eine Nähe eines weit weg von dem Fahrzeug gelegenen Horizonts umfasst und einen Bildabschnitt der Straße umfasst, wobei, wenn erfasst wird, dass Bildabschnitte (50, 51) von anderen Fahrzeugen in den Bildern (Im, Im1, Im2) umfasst sind, welche durch die Kamera (20) aufgenommen worden sind, eine Messbereichswechseleinheit (11) zu einem Messbereich wechselt, in welchem diese Bildabschnitte entfernt sind.

2. Verlagerungsausmaßerfassungsvorrichtung (10) für die an einem Fahrzeug montierte Kamera (20) nach Anspruch 1, wobei der Messbereich (Ea1, Ea2) gemäß einer Position eines Bildabschnitts der Straße in einem Bild festgelegt ist, welches durch die Kamera aufgenommen worden ist.

3. Verlagerungsausmaßerfassungsvorrichtung (10) für die an einem Fahrzeug montierte Kamera (20) nach Anspruch 2, wobei die Messbereichswechseleinheit (11) den Messbereich (Ea1, Ea2) in dem Bild (Im, Im1, Im2), welches durch die Kamera (20) aufgenommen worden ist, gemäß der Position des Bildabschnittes der Straße oder einer Position eines Bildabschnitts eines Objektes in einer Umgebung der Straße wechselt.

**Revendications**

1. Dispositif de détection de grandeur de déplacement (10) pour une caméra montée sur véhicule (20), comprenant :

une unité de calcul de valeur de référence (12) qui divise, dans une image (Im, Im1, Im2) prise par la caméra montée sur véhicule (20) avec une coordonnée verticale (y) et une coordonnée horizontale (x), une région prédéterminée de mesure (Ea1, Ea2) en une pluralité de régions d'unité de mesure (D0, D1, ..... DN) ayant une largeur d'un nombre prédéterminé de pixels dans la direction verticale (Y), et calcule une somme ou une moyenne d'une valeur de luminance (I(x, y, t)) ou une valeur de saturation de pixels à l'intérieur de chaque région d'unité de mesure (D0, D1, ...., DN) en tant que valeur de référence (re(y, t)) de chaque région d'unité de mesure (D0, D1, ...., DN) ;

dans lequel l'unité de calcul de valeur de référence (12) établit un vecteur qui montre une première manière de distribution (VEC(t1)) des valeurs de référence (re(y, t)) dans la direction verticale (Y) calculées par l'unité de calcul de valeur de référence (13) pour une première image (Im1) prise par la caméra à un premier instant d'imagerie (t1) et établit également un vecteur qui montre une seconde manière de distribution (VEC(t2)) des valeurs de référence (re(y, t)) dans la direction verticale (Y) calculées par l'unité de calcul de valeur de référence (13) pour une seconde image (Im2) prise par la caméra à un second instant d'imagerie (t2) différent du premier instant d'imagerie (t1) ; et

une unité de calcul de grandeur de déplacement de caméra (13) qui calcule la grandeur de déplacement ($\Delta y$) de la caméra (20) entre le premier instant d'imagerie (t1) de la première image (Im1) et le second instant d'imagerie (t2) de la seconde image (Im2), sur la base d'une quantité de décalage dans laquelle le degré de corrélation entre la première manière de distribution (VEC(t1)) et la seconde manière de distribution (VEC(t2)) devient le plus élevé,

dans lequel chacune des images (Im, Im1, Im2) prises par la caméra (20) comporte une route devant le véhicule, et

la région de mesure (Ea1, Ea2) est établie à une région comportant une proximité d'un horizon loin du véhicule, et comportant une portion d'image de la route, dans lequel lorsqu'il est détecté que des portions d'image (50, 51) d'autres véhicules sont incluses dans les images (Im, Im1, Im2) prises par la caméra (20), une unité de changement de région de mesure (11) change pour une région de mesure dans laquelle ces portions d'image sont enlevées.

2. Dispositif de détection de grandeur de déplacement (10) pour la caméra montée sur véhicule (20) selon la revendication 1,

dans lequel la région de mesure (Ea1, Ea2) est établie selon une position d'une portion d'image de la route dans une image prise par la caméra.

3. Dispositif de détection de grandeur de déplacement (10) pour la caméra montée sur véhicule (20) selon la revendication 2,

dans lequel l'unité de changement de région de mesure (11) change la région de mesure (Ea1, Ea2) selon la position de la portion d'image de la route, ou une position d'une portion d'image d'un objet aux alentours de la route, dans l'image (Im, Im1, Im2) prise par la caméra (20).

# FIG.1

# FIG.2

VEHICLE TRAVEL ASSISTANCE DEVICE — 10

1

20 CAMERA

21 VELOCITY SENSOR

22 ACCELERATION SENSOR

23 YAW RATE SENSOR

11 REGION FOR MEASUREMENT CHANGING UNIT

12 REFERENCE VALUE CALCULATING UNIT

VEC

13 CAMERA DISPLACEMENT MAGNITUDE CALCULATING UNIT

$\Delta y$

14 PITCH CORRECTING UNIT

30 STEERING DEVICE

31 BRAKING DEVICE

EP 2 605 506 B1

# FIG.3

START

STEP10

INPUT COLOR IMAGE

STEP20

CONVERT TO RGB COLOR FOR
EACH PIXEL BY DEMOSICING

STEP30

LOOP 1
y=0,1,2,···,N、x=0,1,2,···, M

STEP31

CONVERT RGB DATA OF PIXEL AT COORDINATE (x, y)
INTO LUMINANCE VALUE, AND SETS LUMINANCE
VALUE I(x, y, t) OF COORDINATE (x, y)

LOOP 1

STEP40

LOOP 2
y=0,1,2,···,N

STEP41

$$re(y,t) = \frac{\sum\limits_{x=1}^{M} I(x,y,t)}{M}$$

LOOP 2

STEP50

VEC(t)＝[vec(0,t), vec(1,t), ···, vec(N,t)]

STEP60

END

## FIG.4

# FIG.5

FIG.6A

FIG.6B

**EP 2 605 506 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H4287579 B
- JP H03268112 A
- JP H0923419 A
- US 2009153742 A1